Europäisches Patentamt

European Patent Office

Office européen des brevets

(11) Publication number: **0 465 925 A1**

# EUROPEAN PATENT APPLICATION

(21) Application number: **91110505.4**

(22) Date of filing: **25.06.91**

(51) Int. Cl.5: **G21C 3/322**

(30) Priority: **09.07.90 US 549771**

(43) Date of publication of application:
**15.01.92 Bulletin 92/03**

(84) Designated Contracting States:
**CH DE DK ES IT LI SE**

(71) Applicant: **GENERAL ELECTRIC COMPANY**
**1 River Road**
**Schenectady New York 12305(US)**

(72) Inventor: **Johansson, Eric Bertil**
**1219 Olive Branch Lane**
**San Jose, California 95120(US)**
Inventor: **Matzner, Bruce (NMN)**
**1920 Crestmont Drive**
**San Jose, California 95124(US)**

(74) Representative: **Catherine, Alain**
**General Electric France Service de Propriété**
**Industrielle 18 Rue Horace Vernet**
**F-92136 Issy-Les-Moulineaux Cedex(FR)**

(54) Flow diverter with flow tabs for large water rod.

(57) In a nuclear reactor fuel bundle for a boiling nuclear reactor having a large water rod, provision is made in the two-phase region of the fuel bundle for flow tabs on the large water rod for diverting liquid water moderator flowing along the water rod to adjacent fuel rods for the more efficient generation of steam and power.

FIG._1B.

This invention relates to nuclear fuel bundles having large water rods. Specifically, a water rod is disclosed having flow-diverting tabs on the exterior surface thereof.

BACKGROUND OF THE INVENTION

Nuclear fuel bundles for boiling water reactors are well known. Such fuel bundles include a lower tie plate for supporting and holding a matrix of fuel rods in side-by-side relation. The fuel rods at their upper end are held in the same side-by-side relation at an upper tie plate. Between the lower and upper tie plate, a channel surrounds the fuel bundle. This channel confines water flow to the regions immediately adjacent to the individual fuel rods.

The coolant flow through the fuel bundles is a two-phase mixture of water and steam. The coolant entering the bottom of the fuel bundle is entirely water. As it flows upward, the heat transferred from the fuel rods generates steam, and the fraction of steam in the steam-water mixture increases. This increasingly large fraction of steam has nuclear disadvantages.

Water moderator, in addition to providing steam, moderates fast neutrons produced by the fission reaction to slow or thermal neutrons for the continuation of the fission reaction. Naturally, in the upper portion of nuclear fuel bundles where steam produces large void fractions in the moderator, the moderation of fast neutrons is reduced. This reduces the nuclear efficiency of the fuel bundle.

In the prior art, it has been known to solve this problem by the insertion of so-called large water rods. These water rods communicate water without an appreciable steam fraction therein from the bottom of the fuel bundle all the way upward to the top of the fuel bundle. Water within the large water rods increases the moderator-to-fuel ratio at the upper portion of the fuel bundle. Beneficial nuclear effects result from the presence of the large water rod.

Summary of the Problem

The large water rods interrupt the uniform spacing of the fuel rods and create local regions of high flow area adjacent to the water rods. These local regions of high flow area in turn perturb the uniform distribution of flow over the cross section of the fuel bundle. Coolant flow, and steam flow in particular, tends to concentrate in these local regions. Flow in the adjacent regions is reduced.

In one respect, the increased flow in local regions near large water rods is beneficial since it reduces the pressure drop through the fuel bundle. However, the reduced flow in adjacent regions degrades the thermal performance of the fuel rods in these regions. Because of the reduced flow, overheating of these rods will occur at lower powers.

In addition, a film of water accumulates on the surface of the water rod. This water is not available for cooling the surface of the adjacent fuel rods.

The design problem is to eliminate the loss in thermal performance of the fuel rods near the large water rods, while maintaining the reduction in pressure drop which results from the local regions of high flow area.

The reader will understand that the discovery of the problem to be solved can constitute invention. Insofar as the discovery set forth here is novel, invention is claimed.

SUMMARY OF THE INVENTION

In a nuclear fuel bundle for a boiling water nuclear reactor having a large water rod, provision is made in the two-phase region of the fuel bundle for insertion of flow tabs on the large water rod. These flow tabs on the large water rod divert two-phase steam and liquid water moderator flowing along and in spaces adjacent the large water rod to adjacent fuel rods for the more efficient generation of steam. These flow tabs are shaped for efficient diversion of water onto adjacent fuel rod while causing a minimal increase in fuel bundle flow resistance.

The fuel bundle has a lower tie plate for supporting sealed fuel rods in a regular matrix in spaced side-by-side vertical relation, an upper tie plate for maintaining the fuel rods in their regular matrix and a plurality of spacers there between for maintaining the design spacing of the fuel rods along the length of the elongate fuel bundle. A channel surrounds the fuel bundle from the water inlet through the lower tie plate to the steam and water outlet through the upper tie plate. A large water rod is utilized to improve the moderator-to-fuel ratio within the upper two-phase portion of the fuel bundle. This large water rod interferes with the otherwise regular matrix positions, leaving relatively large gaps between the individual fuel rods and the exterior surface of the large central water rod. It has been discovered that two-phase water moderator vents upwardly at these locations without generating efficient steam production. Accordingly, a series of intermittent and outwardly bent tabs are placed around the circumference of the large water rod. The tabs at their surface deflect the upwardly flowing steam/water mixture with the water generally being diverted outwardly to the fuel rods and the steam able to pass upwardly in the intermittently occupied spacial interval between the tabs. This deflection occurs without undue pressure drop in the upper two-phase region of the fuel bundle.

A preferred crown construction for the tabs is illustrated with a tubular section slightly larger than the water rod being intermittently cut to effectively define earlike upward protuberances. These earlike upward protuberances are bent outwardly from the body of the tube to form tabs with spacial intervals there between, imparting to the spacer a "crown" like appearance. The entire "crown" construction is thereafter affixed to the water rod by sliding over the surface of the water rod and being fastened (as by welding to the water rod sides).

Each crown assembly is preferably positioned in elevation to reside just above each spacer assembly. In such position, the deflected water has little vibrational impact on the spaced-apart and braced fuel rods passing through the spacer.

To facilitate fuel bundle assembly, a precise rotational positioning of the tabs with respect to both the locking mechanism for the spacers and aperture for the large water rod in the spacers is required. Accordingly, a system of rotational alignment, insertion, and locking alignment occurs with the water rod firmly locking the spacers in place. The flow-diverting tabs are optimally exposed immediately above and overlying the water rod aperture of the spacers in the two-phase region of the fuel bundle.

Other Objects, Features and Advantages

An object of this invention is to remedy the loss in fuel rod thermal performance caused by the interstitial spacing between the high density fuel arrays and inserted large water rods occupying lattice positions in whole or in part. According to this aspect of the invention, intermittent flow tabs are placed around the periphery of the water rod. Preferably, these flow tabs are positioned above spacers through which the water rods protrude. The tabs have the effect of displacing upwardly flowing water and steam. Water is generally diverted outwardly by the tabs to the fuel rods. At the same time, steam follows a more direct vertical and undiverted path upwardly between the tabs. There results a diversion of upward flow without effecting undue pressure drop in the upper and sensitive two-phase region of the fuel bundle.

An additional object of this invention is to disclose a preferred construction and method of construction for the tabs on the water rod effecting the desired flow diversion. According to this aspect, a tube having a diameter slightly exceeding the diameter of the water rod is provided. This tube is cut and notched at the upper portion thereof to provide a peripheral series of upstanding ears. These ears are thereafter bent downward and outwardly to form flow-diverting tabs, imparting to the entire construction an appearance not unlike a crown. In an alternate fabrication method, the tube is first flared out at its upper end. This results in a short cylinder connected to a cone, similar to a short funnel. Notches are then cut in the cone, leaving the desired flow-diverting tabs. Once fabricated, this "crown" construction is mounted to and welded on the large water rod.

An additional object of this invention is to disclose a preferred location for the flow-diverting tabs. According to this aspect of the invention, the flow-diverting tabs are located adjacent but preferably just above the spacer. At this location, the tabs effect the desired diversion of fluid flow while at the same time diverting liquid against fuel rods at a stable location just beyond the bracing of the fuel rods at the spacer. As a consequence, vibration of the fuel rods sympathetic to the diversion of water by the tabs onto their surfaces is suppressed.

BRIEF DESCRIPTION OF THE DRAWINGS

Other objects, features and advantages of this invention will be more apparent after referring to the following specification and attached drawings in which:

Fig. 1A is a perspective view of a fuel bundle with the channel and fuel rods broken away in the upper two-phase region of the bundle for illustrating the placement of the flow diverters of the present invention;

Fig. 1B is an enlarged detail of a representative flow diverter illustrating water passing along the surface of the large water rod being deflected outwardly to adjacent fuel rods with steam passing upwardly between the tabs on the water rod;

Fig. 2A is a plan elevation of a typical flow tab assembly mounted about a large water rod;

Fig. 2B is a side elevation section taken along lines 2B-2B of Fig. 2A;

Fig. 2C is a vertical section taken along lines 2C-2C of Fig. 2A;

Fig. 3 illustrates the large water rod tabs cooperating with a ten-by-ten lattice of fuel rods;

Fig. 4 includes the large water rod tabs with irregular configuration cooperating with a nine-by-nine lattice; and,

Fig. 5 includes a nine-by-nine lattice having two large water rods with the tabs being placed on the respective two water rods.

DESCRIPTION OF THE PREFERRED EMBODIMENTS

Referring to Fig. 1A, a perspective view of the fuel bundle is illustrated. The bundle B includes a nose piece N and a lower tie plate 40. Lower tie plate 40 supports a matrix of upstanding rods L. Rods L extend upwardly the entire length of the fuel rods to an upper tie plate 42.

A channel 25 extends between the lower tie plate 40 and the upper tie plate 42. This channel confines flow of water exiting the lower tie plate 40 and permits the outflow of water and steam at the upper tie plate 42.

There are shown here, two spacers, spacers S1 and S2. These respective spacers are at the upper two-phase region of the bundle. It can be seen that the fuel bundle herein disclosed includes a large water rod W. It is the cooperation of the large water rod W in the vicinity of adjacent fuel rods L which is the subject of this invention.

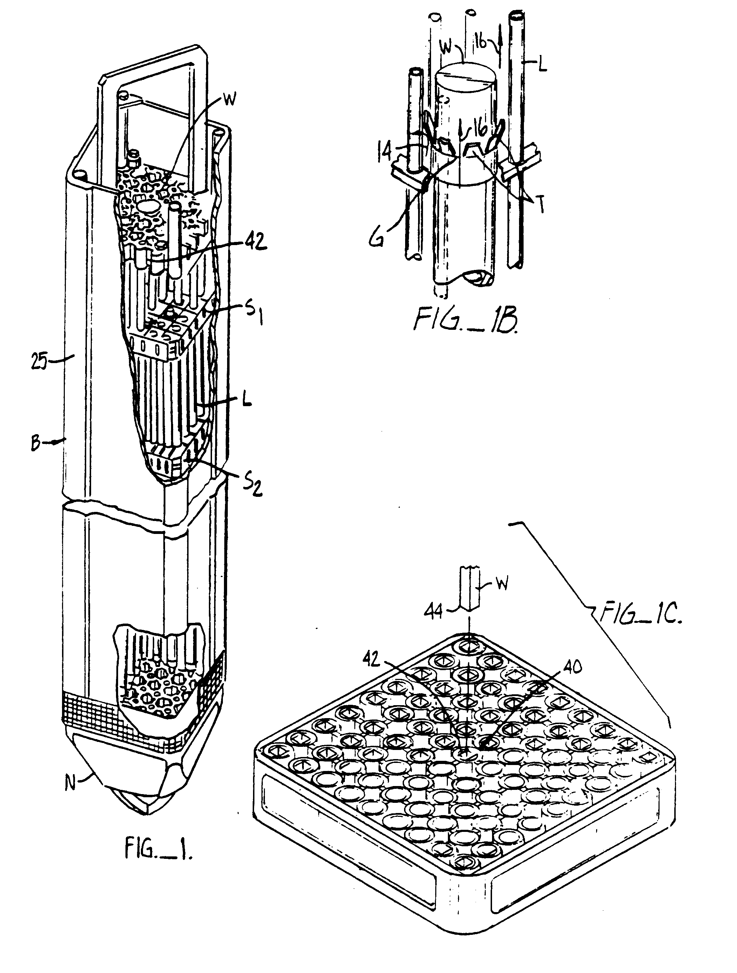

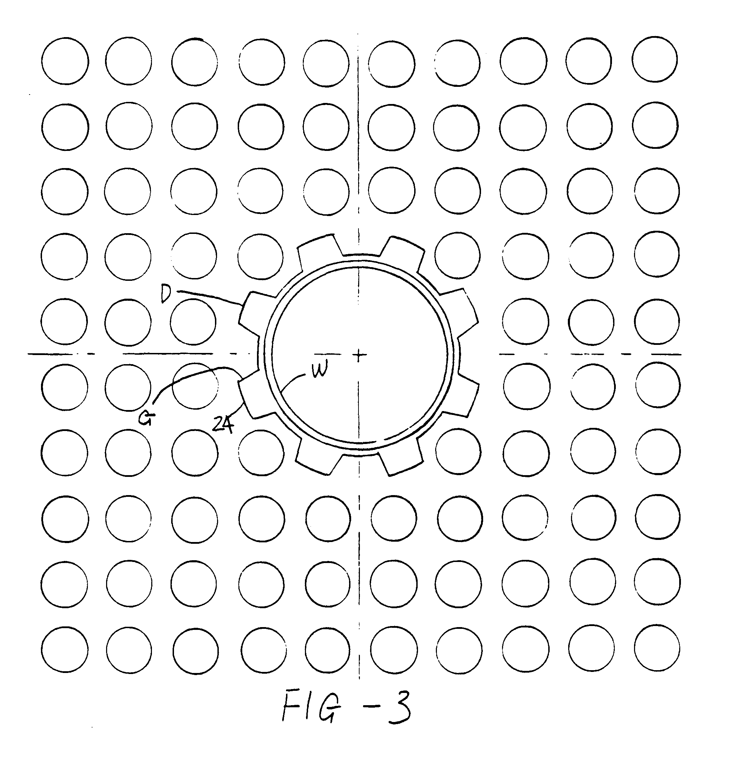

Referring to Fig. 1B, it will be seen that there exist in the matrix large gaps G, these gaps being defined between the interrupted lattice positions of the fuel rods L and the water rods W. These gaps are also illustrated in the lattice cross sections shown in Figs. 3, 4 and 5. It has been discovered that these gaps G can constitute sites for uneven flow. This being the case, it is the object of this invention to divert the flow.

It is believed that water flows in quantity along the surface of the large water rod W. At the same time and in the respective gaps, a greater fraction of steam flows upwardly. Dependent upon the size of the void defined by the gaps G, the upward flow of two-phase moderator can be uneven. It is to this end that the flow-diverting tabs T are utilized.

In operation, the flow-diverting tabs T deflect water flowing along the surface of the large water rod outwardly to and towards the fuel rods L. Such a path is illustrated at 14.

Likewise, steam flows around the tabs following a generally upward and more vertical path. This steam is deflected into the interstitial area between the tabs along path 16. There results as a function of the diverter placed at the large water rod W, a more even flow in the upper two-phase region of the illustrated fuel bundle B.

Referring to Fig. 1C, an important detail of the invention is illustrated. Specifically, a lower tie plate 40 is illustrated having a square central aperture 42. Overlying square central aperture 42 there can be seen the corresponding lower male end of the water rod W, likewise having a square section. This square section is used to rotationally lock the large water rod W with respect to the remainder of the fuel bundle B. As can be seen, end 44 is being fitted to and locked within square aperture 42 in the lower tie plate 40. The rotational locking of the water rod maintains the flow tabs in their correct position relative to the array of fuel rods.

Referring to Figs. 2A-2C, the preferred construction of a typical flow diverter D utilized on the exterior surface of a large water rod W is illustrated. Typically, a section of tubing 20 is utilized. Tubing 20 is provided with a notching at respective notches 22.

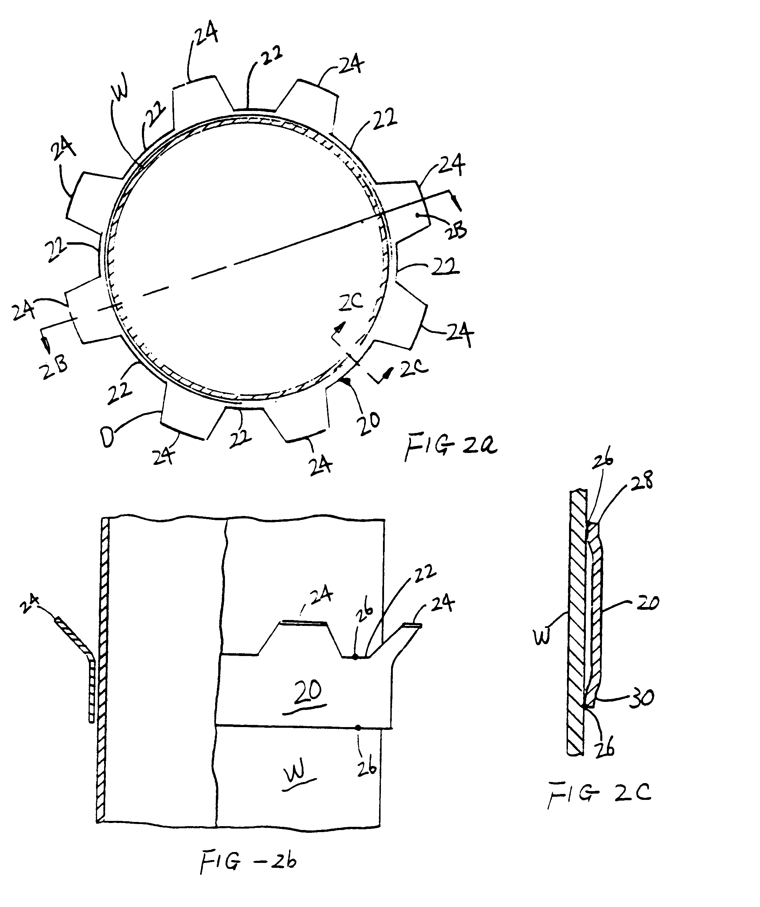

Once notches 22 are formed, the respective diverting tabs are bent downwardly and outwardly in the manner illustrated in Fig. 2B.

In an alternate construction, the tubing 20 is first flared outward in its upper portion to form a funnel-like structure. After the outward flaring, portions of the outwardly flared part of the tube are cut away, leaving the flow-diverting tabs.

The reader can immediately see that a crown-like construction is formed. Typically, this crown-like construction is fastened in precise elevation to the sides of the large water rod W by tack-welds as at welds 26. See Fig. 2B.

It is preferred that the construction of the ring 20 with respect to the side of the water rod W be annular. Specifically, the ring is deflected inwardly at a first end 28 adjacent weld 26 and at a second and lower end 30 adjacent the lower weld 26. Such a construction provides for the ideal positioning of the flow-diverting tabs.

The inner diameter of the ring is slightly larger than the outer diameter of the water rod, leaving an annular gap. This gap allows a small amount of flow between the ring and the water rod. If the gap were small, crevice corrosion could occur and build up of an oxide corrosion film could act as a wedge between the water rod and the ring.

Referring to Fig. 3, details of the ring of Figs. 2A-2C placed on the large water rod W of a ten-by-ten lattice is illustrated. As can be seen, the respective tabs 24 extend outwardly into the gap areas G defined between the interruption of the illustrated ten-by-ten matrix with the large water rod W. The reader will understand, that the exact positioning of the tabs 24 with respect to the gaps G is dependent upon the density of the lattice, the size of the large water rod and the matrix positions partially interrupted. Dependent upon the size of the gap ultimately produced, it will be further understood that the flow-diverting tabs can change in dimension.

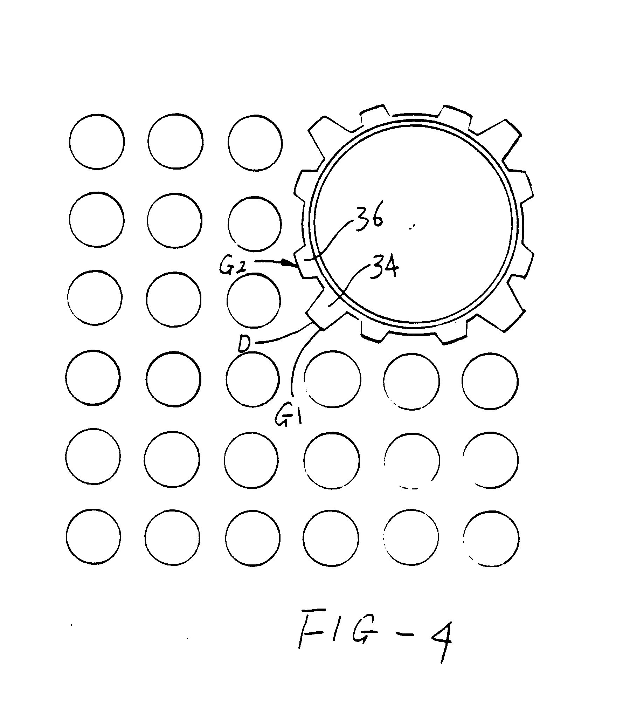

Referring to Fig. 4, a nine-by-nine lattice is illustrated. The construction of the flow diverter D is precisely analogous to that illustrated with respect to Figs. 2A-2C. Here however, tabs 34 are positioned to extend outwardly into large gap areas G1. Tabs 36 are positioned to extend into the smaller gap areas G2. The combined result of the varying size tabs 34, 36 with respect to the varying gaps assures even upward flow in the two-phase region of the bundle.

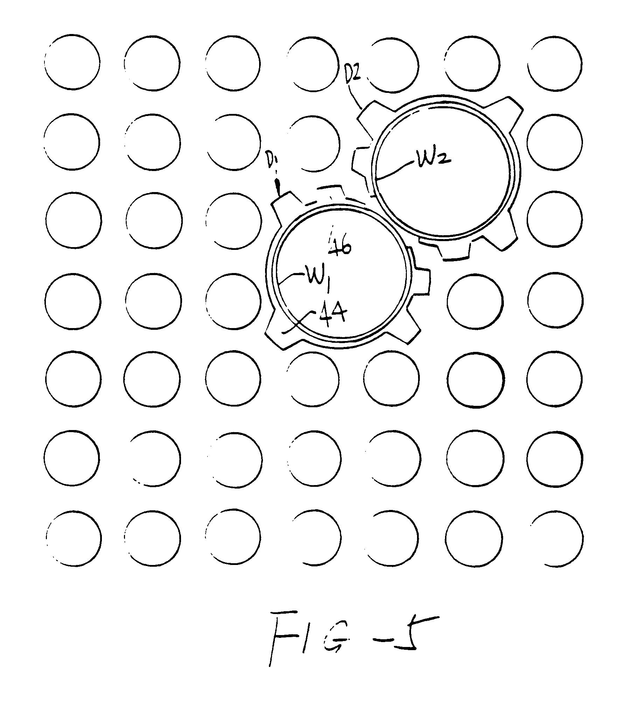

Referring to Fig. 5, a detail of a nine-by-nine matrix is illustrated in which two large water rods W1 and W2 are centrally located. These respective large water rods include large diverter tabs 44 and small diverter tabs 46. It will further be seen that the ring construction previously illustrated has been interrupted. Instead, the respective diverter assemblies D1, D2 have been constructed from two C-shaped tubing sections. These details are identical to the construction previously illustrated.

## Claims

1. In a fuel bundle having:

a lower tie plate for supporting fuel rods and defining liquid moderator inflow apertures between said supported fuel rods;

a plurality of fuel rods supported on said lower tie plate in a matrix with said fuel rods each occupying a matrix position in said matrix;

an upper tie plate for holding said fuel rods in parallel upstanding side-by-side relation and permitting the outflow of vapor and liquid moderator;

a channel for surrounding said lower tie plate, said upper tie plate and said plurality of fuel rods there between for confining moderator fluid flow along a path through the lower tie plate interior of the fuel bundle for the generation of vapor moderator within a two-phase region of the fuel bundle, said moderator liquid and vapor passing out of said upper tie plate;

at least one large-diameter water rod disposed centrally of said bundle, said large-diameter water rod at least partially occupying a plurality of matrix positions in said fuel bundle for forming in the interstitial area across the fuel bundles at the large water rod irregular gaps for upward fluid flow, said irregular gaps extending into an upper two-phase region of said bundle including an upward flow of water and steam during nuclear steam generation in said bundle, the improvement to said large water rod comprising:

a plurality of spaced-apart peripheral flow-diverting tabs fastened to said water rod in said upper two-phase region of said fuel bundle, said tabs protruding outwardly from the sides of said large water rod into said irregular gaps for defining intermittent flow-diverting surfaces whereby liquid moderator passing adjacent said large water rod is deflected outwardly and vapor adjacent said large water rod passes intermittently of said flow-diverting tabs.

2. In the fuel bundle of claim 1 wherein said fuel bundle includes a spacer at preselected vertical elevations in the two-phase region of said bundle, the improvement to said large water rod comprising said plurality of spaced-apart flow-diverting tabs being positioned immediately overlying said spacer.

3. The invention of claim 1 wherein said peripheral flow-diverting tabs include a tubular base at least partially surrounding said large water rods;

said tubular base intermittently notched to form upwardly disposed tabs at the upper portion of said tubular base;

said tabs bent downwardly and outwardly with respect to said tubular base for deflecting two-phase moderator outwardly relative to said large water rod.

4. The inventions of claim 1 wherein said peripheral flow-diverting tabs include a tubular base at least partially surrounding said large water rods;

said tubular base flared outward at the upper portion of said tubular base to form a conical shape;

said conical shape notched to leave outwardly projecting tabs.

5. The invention of claim 1 wherein said peripheral flow-diverting tabs include a tubular base at least partially surrounding said large water rod;

said tubular base having an inner diameter slightly greater than the water rod outer diameter so as to form an annular gap between the tubular base and the water rod;

portions of said ring deflected inward to contact the water rod;

said inwardly deflected region welded to the large water rod.

6. A fuel bundle comprising:

a lower tie plate, said lower tie plate including a rod support portion and defining apertures for the inflow of moderator;

a plurality of fuel rods supported on said lower tie plate in a matrix, each said fuel rod occupying a matrix position in said matrix;

an upper tie plate for holding said fuel rods in parallel upstanding side-by-side relation, said upper tie plate defining apertures for permitting the outflow of two-phase moderator;

a channel for surrounding said lower tie plate, said upper tie plate and said plurality of fuel rods therebetween for confining moderator fluid flow interior of the fuel bundle for the generation of vapor moderator within an upper two-phase region of said fuel bundles, said two-phase moderator passing out of said upper tie plate;

at least one large diameter water rod disposed centrally of said fuel bundle, said large diameter water rod at least partially occupied a plurality of matrix position in said fuel bundle for forming an interstitial area in the fuel bundle at the large water rod, said interstitial area defining irregular fluid gaps for upward fluid flow, said irregular gaps extending into the upper two-phase region of said bundle;

a plurality of spaced-apart peripheral flow-diverting tabs fastened to said water rod in said upper two-phase region of said fuel bundle, said tabs protruding outwardly from the sides of said large water rod into said irregular gaps for defining intermittent flow-diverting surfaces whereby liquid moderator passing adjacent said large water rod is deflected outwardly and vapor moderator adjacent said large water rod passes intermittently of said flow-diverting tabs.

7. In the fuel bundle of claim 6 and wherein said fuel bundle includes a spacer at a preselected vertical elevation in the two-phased region of said bundle, said flow-diverting tabs being fastened to said large water rod immediately overlying said spacer.

8. The invention of claim 6 and wherein said peripheral flow-diverting tabs about said large water rod include:

a tubular base at least partially surrounding said large water rod;

said tubular base intermittently notched to form upwardly disposed tabs at the upper portion of said tubular base;

said tabs bent downwardly and outwardly with respect to said tubular base for deflecting water outwardly relative to said large water rod and permitting steam to pass intermittently of said flow-diverting tabs.

9. In a fuel bundle including:

a lower tie plate for supporting a plurality of fuel rods, said lower tie plate defining apertures for permitting the inflow of moderator through said lower tie plate;

a plurality of fuel rods supported on said lower tie plate in a matrix, each said fuel rod occupying a matrix position;

an upper tie plate for holding said fuel rods in parallel upstanding side-by-side relation, said upper tie plate having apertures for permitting the outflow of liquid and vapor moderator;

a channel for surrounding said lower tie plate, said upper tie plate and said plurality of fuel rods therebetween for combining water moderator along a path through the lower tie plate interior of the fuel bundle for the generation of vapor moderator within a two-phase region of the fuel bundle, said vapor moderator passing out of said upper tie plate;

at least one large diameter water rod disposed centrally of said bundle, said large diameter water rod being larger than said fuel bundles and therefore at least partially occupying a plurality of matrix positions in said fuel bundle whereby said large water rod defines gaps for upward fluid flow, said gaps extending into the upper two-phase region of said bundle, a method of providing a plurality of spaced-apart peripheral flow-diverting tabs to said large water rod comprising the steps of:

providing a tube having a diameter larger than said large water rod;

flaring said tube at an upward portion thereof outwardly to form a conical shape;

notching said conical shape at the upward portion of said tube to leave outwardly projecting tabs; and

positioning said tube on said large water rod to permit said tabs to project outwardly from said large water rod.

10. The process of claim 9 including the steps of mounting a spacer in said fuel bundle for spacing said rods in parallel side-by-side relationships; and,

placing said tubular member to said large water rod with said flow-diverting tabs immediately above said spacer whereby deflection of water from said spacer has minimal vibrating effect on said fuel rods.

FIG.__1.

FIG.__1B.

FIG.__1C.

FIG 2a

FIG -2b

FIG 2C

FIG - 3

FIG - 4

FIG - 5

European
Patent Office

EUROPEAN SEARCH
REPORT

Application Number

EP 91 11 0505

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | DE-U-8 802 565   (SIEMENS)<br>* Page 6, lines 6-28; page 7, line 35 - page 8, line 30; figures 1-3 * | 1-2,6-7 | G 21 C 3/322 |
| Y | | 3,8 | |
| Y | US-A-4 775 510   (BRYAN)<br>* Column 3, line 65 - column 4, line 64; figures 1-2 * | 3,8 | |
| A | FR-A-2 163 677   (COMBUSTION ENG.)<br>* Page 4, line 11 - page 6, line 23; figures 3-4 * | 1,3,6,8 | |
| A | EP-A-0 346 657   (GENERAL ELECTRIC)<br>* Column 4, lines 16-57; column 7, lines 49-57; column 9, lines 2-35; figures 4-7D * | 5 | |

TECHNICAL FIELDS
SEARCHED (Int. Cl.5)

G 21 C 3/00

The present search report has been drawn up for all claims

| Place of search | Date of completion of search | Examiner |
|---|---|---|
| The Hague | 25 September 91 | CAPOSTAGNO E. |

CATEGORY OF CITED DOCUMENTS

X : particularly relevant if taken alone
Y : particularly relevant if combined with another
document of the same catagory
A : technological background
O : non-written disclosure
P : intermediate document
T : theory or principle underlying the invention

E : earlier patent document, but published on, or after
the filing date
D : document cited in the application
L : document cited for other reasons

& : member of the same patent family, corresponding
document